# EUROPÄISCHE PATENTSCHRIFT

(11) **EP 2 251 576 B1**
(45) Veröffentlichungstag und Bekanntmachung des Hinweises auf die Patenterteilung: **07.11.2018**
(21) Anmeldenummer: 10161102.8
(22) Anmeldetag: 27.04.2010
(51) Int. Cl.: F16K 17/38, F16L 5/02, F16L 55/10, A62C 2/00

(54) **Hauseinführung für Rohrleitungen**
Lead-through of conduits through buildings
Passage de conduite au travers des bâtiments

(30) Priorität: 12.05.2009 DE 102009021000; 10.06.2009 DE 102009030163
(43) Veröffentlichungstag der Anmeldung: 17.11.2010
(73) Patentinhaber: Franz Schuck GmbH, 89555 Steinheim (DE)
(72) Erfinder: Mack, Hans, 89537 Giengen (DE); Ezel, Markus, 89555 Steinheim (DE)
(74) Vertreter: Lorenz, Markus

(56) Entgegenhaltungen:
- EP-A1- 1 962 003
- DE-C1- 3 700 473
- US-A- 5 122 054

## Beschreibung

Die Erfindung betrifft eine Vorrichtung zum Verschließen eines Leitungssystems, mit einer Absperreinheit und einer Aktuatoreinheit gemäß dem Oberbegriff von Anspruch 1.

Eine gattungsgemäße Vorrichtung ist aus der DE 198 13 306 A1 bekannt.

Vorrichtungen zum Verschließen eines Leitungssystems werden insbesondere in Leitungen verwendet, mit denen Gas (Stadtgas) in Gebäude eingeführt wird. Ein wesentliches Sicherheitskriterium ist dabei, dass die Leitungen im Brandfall bzw. beim Auftreten von Hitze zuverlässig und vorzugsweise selbständig verschlossen werden können. Die Vorrichtungen zum Verschließen müssen daher strengen Sicherheitsanforderungen genügen. Sie dürfen im Laufe des Betriebs nicht ihre Fähigkeit verlieren, im Notfall sicher abzusperren. Der Betriebszustand dieser Vorrichtung soll möglichst auch von außen sofort und leicht erkennbar sein.

Aus dem allgemeinen Stand der Technik, beispielsweise auch aus der DE 197 49 280 A1, sind gattungsgemäße Vorrichtungen bekannt, die eine Sicherheitseinrichtung aufweisen, die dafür sorgt, dass beim Auftreten von Hitze ein schnelles Verschließen der Absperreinheit erfolgt. Zu diesem Zweck verwendet man vorzugsweise Metalle, die einen extrem niedrigen Schmelzpunkt aufweisen, wie beispielsweise Woodsches-Metall. Dies kann z. B. Bestandteil eines Stützelements sein, das entgegen der Kraft einer Feder den Schließkörper der Absperreinheit in Offenstellung hält. Beim Auftreten von Hitze schmilzt das genannte Metall und entweicht beispielsweise durch entsprechende Bohrungen eines umgebenden Gehäuses. Das geschmolzene Metall macht den Weg frei für das Stützelement, so dass dieses - zusammen mit dem Schließkörper - unter der Kraft der genannten Feder ausweichen kann, womit der Schließkörper in eine Schließposition gelangt. Die gattungsgemäßen Vorrichtungen arbeiten im Allgemeinen im Notfall, d. h. beim Auftreten von Hitze, einwandfrei.

Eine manuelle Betätigung derartiger Vorrichtungen ergibt sich sowohl aus der gattungsgemäßen Schrift, als auch aus der DE 101 17 561 A1.

Aus der DE 101 17 561 A1 ist ferner ein sogenannter Gasstopp bekannt. Dabei handelt es sich um eine Hülse, die an ihrem angeströmten Ende einen Ventilsitz aufweist, ferner einen Ventilteller, der mit dem Ventilsitz zusammenarbeitet. Der Ventilteller ist relativ zum Ventilsitz axial begrenzt beweglich. Sein Außendurchmesser ist geringer als die lichte Weite des Leitungsabschnitts, in dem der Gasstopp eingesetzt ist. Eine Feder hält bei normalen Betriebsbedingungen den Ventilteller in einem gewissen axialen Abstand vom Ventilsitz, so dass Gas die Umfangskante des Ventilteller umströmen und somit den gesamten Gasstopp durchströmen kann.

Tritt stromabwärts des Gasstopps ein Leck auf, so führt dies zu einer Steigerung des Durchsatzes. Übersteigt der Durchsatz ein bestimmtes maximales Maß, so führt dies im Bereich des Ventilsitzes zu einer Steigerung der Strömungsgeschwindigkeit. Dies hat nach dem Gesetz von Bernoulli einen Unterdruck in diesem Bereich zur Folge. Dieser wird so groß, dass der Ventilteller entgegen der Kraft der Feder an den Ventilsitz herangezogen und der Gasstrom hierdurch abgesperrt wird.

Aus der DE 44 44 503 C2 ist ein Absperrventil bekannt, das im Inneren eines Gebäudes angeordnet ist. Das Absperrventil weist dabei ein in die Schließstellung vorgespanntes Stellglied auf, das mittels eines thermisch auslösbaren Verriegelungsglieds in der Offenstellung gehalten ist. Außerhalb des Gebäudes ist ein Schalter angeordnet, welcher einen Stromkreis betätigen soll, so dass das Verriegelungsglied auslöst und das Sperrventil schließt. Der Schalter soll gemäß der DE 44 44 503 C2 außerhalb des Gebäudes angeordnet sein, damit ein Feuerwehrmann die Absperrvorrichtung im Gebäudeinneren verschließen kann, ohne in das Gebäude eindringen zu müssen. Eine weitere offenbarte Möglichkeit besteht darin, dass im Gebäudeinneren ein Schaltgerät angeordnet ist, in dem eine Stromversorgung und ein Funkempfänger integriert ist. Die Feuerwehr kann somit durch ein Funkgerät ein Signal abgeben, welches den Stromkreis schließt.

Von Nachteil bei den aus den zitierten Schriften und dem allgemeinen Stand der Technik bekannten Vorrichtungen zum Verschließen von Leitungen ist es, dass diese aufgrund der im Brandfall geforderten Sicherheitsanforderungen verhältnismäßig teuer sind. So muss nicht nur gewährleistet werden, dass die Leitung im Brandfall vorzugsweise automatisch und schnell verschlossen wird, sondern es muss auch gewährleistet sein, dass alle Teile, die die Leitung verschlossen halten, den im Brandfall entstehenden Temperaturen - zumindest über einen definierten Zeitraum - widerstehen. Aufgrund der sehr engen Toleranzen, die eine hochpräzise Herstellung der beteiligten Komponenten erforderlich machen und der Notwendigkeit, dass sich die Toleranzen auch im Brandfall nicht ändern, müssen alle zum Verschließen der Leitung notwendigen Komponenten aus hochwertigen und sowohl hitze- als auch feuerbeständigen Werkstoffen hergestellt werden. Keine Komponente, die für die Durchführung des Schließvorganges oder dafür notwendig ist, die Absperreinheit in Verschlussstellung zu halten, darf schmelzen. Die Absperreinheit ist in der Regel aus hochpräzisen metallischen Drehteilen, z. B. aus Messing gefertigt.

Diese Anforderungen führen dazu, dass die Vorrichtungen zum Verschließen eines Leitungssystems sowohl bezüglich der Herstellung der Komponenten als auch bezüglich der Materialkosten teuer sind.

Aus der DE 202 01 819 U1 ist ein sensorgesteuertes Rohrventil bekannt, dem die Aufgabe zugrunde liegt, zu vermeiden, dass durch Leckagen in Gebäudeanschlussleitungen außerhalb des Gebäudes Medium in das Gebäude eindringt. Die DE 202 01 819 U1 lehrt dabei, die Absperreinrichtung vorzugsweise unmittelbar an der Hauptleitung zu platzieren, so dass eine Leckage außerhalb des Gebäudes abgestellt werden kann. Zur Erkennung der Leckage ist im Inneren des Gebäudes ein Sensor positioniert, der eine Leckage erkennen und in diesem Fall den Stromkreis zum Absperren der Absperreinheit schließen soll.

Daneben ist aus der deutschen Offenlegungsschrift DE 10 2006 022 641 A1 eine Hauseinführung bekannt, bei der eine mechanisch betätigte Absperreinheit außerhalb einer Wärmeeinflusszone in einer Rohrleitung angeordnet ist und bei der die mechanische Schließung der Absperreinheit eine direkte Folge der Temperaturerhöhung in der Wärmeeinflusszone ist.

Aus der DE 37 00 473 C1 ist eine Mauerdurchführung bestehend aus einem PE-Rohr und einem Schutzrohr bekannt. Die Mauerdurchführung weist ein thermisch gesteuertes Sicherheits-Absperrventil mit einem Temperaturfühler auf. Der vorliegenden Erfindung liegt daher die Aufgabe zugrunde, eine Vorrichtung zum Verschließen eines Leitungssystems zu schaffen, die ein zuverlässiges Schließen beim Auftreten von Hitze ermöglicht und sowohl hohe Sicherheitsanforderungen erfüllt als auch einfach und kostengünstig herstellbar ist.

Diese Aufgabe wird erfindungsgemäß durch die Vorrichtung mit den in Anspruch 1 aufgeführten Merkmalen gelöst. Die erfindungsgemäße Vorrichtung zum Verschließen eines Leitungssystems zeigt eine in einer Rohrleitung angeordneten Absperreinheit und eine Aktuatoreinheit, wobei die Aktuatoreinheit in einer möglichen Wärmeeinflusszone angeordnet ist. Die Aktuatoreinheit ist dabei geeignet, wenn sie einer Temperatur ausgesetzt ist, die einen definierten Bereich übersteigt, derart auf die Absperreinheit einzuwirken, dass die Absperreinheit das Leitungssystem verschließt. Ferner ist die Absperreinheit außerhalb der Wärmeeinflusszone angeordnet. Erfindungsgemäß ist die Absperreinheit in einem Gehäuse angeordnet, welches in einer Distanzhülse aufgenommen ist, die in die Rohrleitung eingeschoben ist, wodurch ein modularer Aufbau der gesamten Vorrichtung erreicht wird. Insbesondere kann die Baugruppe aus Distanzhülse und Absperreinheit standardisiert hergestellt und für eine Vielzahl von Einbausituationen identische verwendet werden. Daneben gewährleistet der modulare Aufbau eine erleichterte Montage bzw. Demontage bspw. in Zusammenhang mit Wartungsarbeiten.

Dadurch, dass die Rohrleitung an ihrer Innenseite einen Anschlag zur Begrenzung des Einschubweges der Distanzhülse aufweist, wird der korrekte Einbau der Distanzhülse in der Rohrleitung erleichtert. Die Realisierung des Anschlages wird unter anderem auch dadurch vereinfacht, dass die Rohrleitung im Bereich der eingebauten Distanzhülse an ihrer Innenseite aus einem Kunststoff, insbesondere als Kunststoff-Spritzgussteil ausgebildet ist.

Erfindungsgemäß ist die Distanzhülse aus einem Kunst-stoff hergestellt. Fertigungstechnisch einfach lässt sich die Distanzhülse als Kunststoff-Spritzgussteil ausbilden.

In einer Variante der Erfindung ist der Anschlag als umlaufender Absatz ausgebildet, wodurch sich -insbesondere in Verbindung mit einer Realisierung von Distanzhülse und Rohrleitung als Kunststoffteile - auf einfache Weise eine gasdichte Verbindung realisieren lässt. Die aufwendige spanende Bearbeitung der Innenseite metallischer Rohre zur Herstellung des Anschlags bzw. des umlaufenden Absatzes erübrigt sich durch die Verwendung von Kunststoffteilen, da in diesem Fall der Absatz bereits beim Abformen gasdicht herstellbar ist.

In einer weiteren alternativen Ausgestaltung kann auch vorgesehen sein, dass die Distanzhülse eine Umfangserweiterung aufweist, die als Anschlag dient. Vorzugsweise ist die Umfangserweiterung dabei an dem dem Aktuator zugewandten Ende der Distanzhülse ausgebildet. Dabei kann die Umfangserweiterung beim Einschieben der Distanzhülse in die Rohrleitung an einer Stirnseite der Rohrleitung anschlagen.

Dadurch, dass die Rohrleitung lösbar mit einem Anschlussgehäuse verbunden ist, lässt sich eine leichte Zugänglichkeit der einzelnen Baugruppen der erfindungsgemäßen Vorrichtung sicherstellen.

Zur Verbesserung der Positionierung der Distanzhülse in der Rohrleitung und zur Vereinfachung der Montage kann das Anschlussgehäuse einen in das Innere der Rohrleitung ragenden Stutzen aufweisen, dessen Stirnseite zusammen mit dem Anschlag der Rohrleitung die Distanzhülse im Inneren der Rohrleitung fixiert.

Die Absperreinheit ist in einem Gehäuse in das dem Anschlussgehäuse abgewandte Ende der Distanzhülse eingeschoben und kann zwischen einem Widerlager und dem Anschlag fixiert sein.

Dabei ist das Gehäuse aus einem Kunststoff gebildet.

Die Aktuatoreinheit kann mechanisch, insbesondere über eine Betätigungsstange in Wirkverbindung mit der Absperreinheit stehen.

Die Aktuatoreinheit kann in üblicher Weise in einer möglichen Wärmeeinflusszone angeordnet sein und derart mit der Absperreinheit zusammenwirken bzw. geeignet sein, derart auf die Absperreinheit einzuwirken, dass die Absperreinheit das Leitungssystem verschließt. In einer einfachen Ausgestaltung kann dies durch eine Betätigung der Aktuatoreinheit von Hand, beispielsweise mittels eines Betätigungshebels, erfolgen, der eine entsprechende Schließbewegung auf die Absperreinheit überträgt. In anderen möglichen Ausgestaltungen kann dies beispielsweise elektrisch und/oder per Fernauslösung, z. B. über Funksignale, erfolgen. In einer weiteren Ausgestaltung ist es möglich, dass die Aktuatoreinheit oder Teile davon temperaturbeeinflussbar sind, so dass die Aktuatoreinheit die Absperreinheit selbständig verschließt, wenn die Aktuatoreinheit einer Temperatur ausgesetzt ist, die einen definierten Bereich übersteigt. Die verschiedenen Möglichkeiten, die Absperreinheit zu bedienen, können auch miteinander kombiniert werden. So kann zum Beispiel in einer bevorzugten Ausgestaltung vorgesehen sein, dass die Aktuatoreinheit temperaturbeeinflussbar ist und somit beim Erreichen einer definierten Temperatur die Absperreinheit verschließt (mechanisch, elektrisch, per Funk oder dergleichen), wobei zusätzlich eine Bedienung der Aktuatoreinheit von Hand vorgesehen ist, um die Absperreinheit zu schließen oder zu öffnen.

Die Erfindung eignet sich besonders für Armaturen für die Errichtung von Hausanschlüssen, insbesondere für die Hauseinführung von Gas. Dabei wird die Aktuatoreinheit im Gebäudeinneren, z. B. im Bereich einer Innenwand, angeordnet. Die Aktuatoreinheit befindet sich also im Brandfall in einer möglichen Wärmeeinflusszone, in der Temperaturen von z. B. 650 °C entstehen können. Die Absperreinheit, die sogenannte Hauptabsperrung, wird räumlich so weit von dem Aktuator, welcher zur Bedienung der Absperreinheit vorgesehen ist, getrennt, dass die Absperreinheit außerhalb der Wärmeeinflusszone angeordnet ist. Darunter ist zu verstehen, dass die Absperreinheit so angeordnet ist, dass diese bei einem Ansteigen der Temperatur in der Wärmeeinflusszone nur unkritisch erwärmt wird, vorzugsweise auf unter 90 °C. Bei der Errichtung eines Hausanschlusses ist es vorteilhaft, wenn die Absperreinheit in einer Rohrleitung angeordnet ist, die in das Gebäude führt. Die Absperreinheit kann dabei so in der Rohrleitung positioniert sein, dass die Absperreinheit außerhalb der möglichen Wärmeeinflusszone, d. h. dem Gebäudeinnenraum, angeordnet ist.

Dadurch, dass in einer bevorzugten Ausgestaltung eine temperaturbeeinflussbare Aktuatoreinheit in einer möglichen Wärmeeinflusszone (z. B. im Inneren eines Gebäudes) angeordnet ist und die Aktuatoreinheit derart in Wirkverbindung mit der Absperreinheit steht, dass die Absperreinheit das Leitungssystem verschließt, wenn die Aktuatoreinheit einer Temperatur ausgesetzt ist, die einen definierten Bereich übersteigt, wird gewährleistet, dass bei Auftreten übermäßiger Hitze oder im Brandfall das Leitungssystem selbständig verschlossen wird. Dies kann beispielsweise dadurch erfolgen, dass die temperaturbeeinflussbare Aktuatoreinheit die Absperreinheit entgegen eines Kraftelementes der Absperreinheit in Offenstellung hält. Bei Auftreten von Hitze bzw. im Brandfall können dabei eines oder mehrere Elemente der temperaturbeeinflussbaren Aktuatoreinheit, beispielsweise der Exzenter, eine Schmelzsicherung oder eine Betätigungsstange, die die Aktuatoreinheit mit der Absperreinheit verbindet, derart beeinflusst werden (beispielsweise Schmelzen), dass die Aktuatoreinheit die Absperreinheit nicht mehr entgegen deren eigener Kraft (Federkraft) offen halten kann. Nachdem der Widerstand bzw. die der Absperreinheit entgegenwirkende Kraft der Aktuatoreinheit temperaturbeeinflusst entfallen ist, verschließt sich die Absperreinheit sofort selbständig und bleibt verschlossen. Somit kann beispielsweise unbeachtlich bleiben, ob die gesamte Aktuatoreinheit im folgenden durch die Hitze bzw. einen Brand zerstört wird.

Nachfolgend wird ein Ausführungsbeispiel der Erfindung anhand der Zeichnung erläutert.

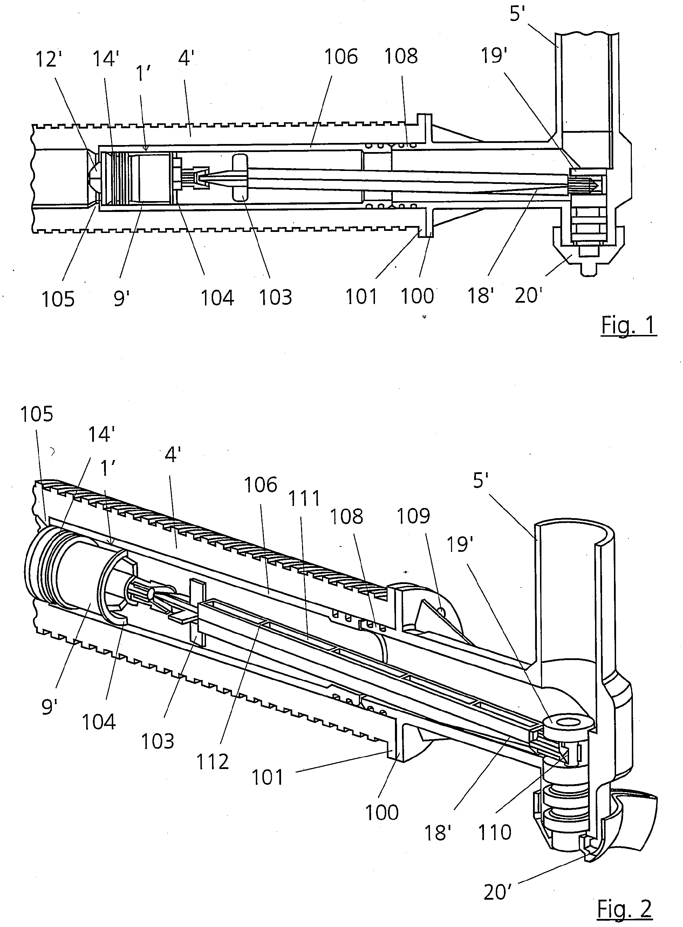

Die Figuren 1 und 2 zeigen - einmal als reine Schnittdarstellung und einmal als perspektivische Schnittdarstellung- eine Hauseinführung mit einem Anschlussgehäuse 5', welches an seinem wandseitigen Ende den Flansch 100 zeigt, über den es mit einem korrespondierenden Flansch 101 einer Rohrleitung 4' lösbar verbunden ist. Sowohl die Rohrleitung 4' als auch das Anschlussgehäuse 5' können dabei jeweils einstückig aus Kunststoff-Spritzgussteilen hergestellt sein.

Wie in der Figur gezeigt, kann zur besseren Zentrierung des Anschlussgehäuses 5' gegenüber der Rohrleitung 4' das Anschlussgehäuse 5' einen Stutzen 108 aufweisen, der über eine bestimmte Länge in das Innere der Rohrleitung 4' ragt und auf diese Weise die Zentrierung des Anschlussgehäuses 5' gegenüber der Rohrleitung 4' gewährleistet. Im gezeigten Beispiel schließt sich an den Stutzen 108 im Inneren der Rohrleitung 4' eine Distanzhülse 106 an, die auf der dem Stutzen 108 abgewandten Seite im Inneren der Rohrleitung 4' von einem Anschlag 105 abgestützt wird, der im gezeigten Beispiel als umlaufender Absatz ausgebildet ist. Dadurch, dass die Rohrleitung 4' aus einem Kunststoff hergestellt ist, kann mit vergleichsweise geringem Aufwand eine gasdichte Einbausituation im Bereich der Absperreinheit erreicht werden. Die aufwendig spanende Bearbeitung der Innenseite von metallischen Rohrleitungen zur Realisierung eines Anschlags kann bei der gezeigten Lösung entfallen, was einen erheblichen produktionstechnischen Vorteil darstellt.

Auch die Distanzhülse 106 kann aus einem Kunststoff bestehen. Sie enthält an ihrem dem Stutzen 108 abgewandten Ende das Gehäuse 9' der Absperreinheit 1', das ein im Wesentlichen analog wie in der DE 10 2006 022 641 A1 aufgebautes Ventil mit Schließkörper 12' und Feder 14' aufweist.

Die Feder 14' wirkt auf den Schließkörper 12' eine Kraft aus, die diesen in Verschlussstellung drückt, d. h. in Richtung auf einen nicht näher dargestellten Ventilsitz. Damit sich im normalen Betrieb, in dem vorgesehen ist, dass durch die Rohrleitung 4' Gas strömen kann, der Schließkörper 12' nicht aufgrund der Federkraft der Feder 14' in Verschlussstellung befindet, wirkt die Aktuatoreinheit der Schließkraft der Feder 14' entgegen. Die Kraft der Aktuatoreinheit ist dabei größer als die der Feder 14', so dass der Schließkörper 12' von dem Ventilsitz abgehoben und in dieser Position fixiert ist. Im Ausführungsbeispiel ist die Aktuatoreinheit dabei mittels einer Betätigungsstange 18' mit dem Schließkörper 12' verbunden bzw. wirkt auf diesen ein. Die Betätigungsstange 18' überbrückt den Abstand zwischen der Aktuatoreinheit 20' und der Absperreinheit 1'. Das Prinzip ist insbesondere bezüglich der Figur 5 der DE 10 2006 022 641 A1 detailliert beschrieben.

Die Betätigungsstange 18' weist im Ausführungsbeispiel eine gewichtssparende Wabenkonstruktion auf bzw. ist gekammert ausgebildet. Hierzu sind in der Betätigungsstange 18' Durchbrüche 111 bzw. Hohlräume/Kammern vorgesehen, die durch Versteifungsrippen 112 bzw. Verstrebungen voneinander getrennt sind. Ferner kann die Bestätigungsstange 18' im Bereich des Anschlussgehäuses 5' eine Verjüngung aufweisen, so dass die Betätigungsstange 18' auf dem Boden der rohrförmigen Innenseite des Anschlussgehäuses 5' aufliegt.

Das Gehäuse 9' der Absperreinheit 1' ist ebenfalls aus Kunststoff gebildet und innerhalb der Distanzhülse 106 auf der dem Anschlussgehäuse 5' zugewandten Seite mittels einer Umfangserweiterung an einem in der Distanzhülse 106 ausgebildeten Widerlager 104 abgestützt.

Das Widerlager 104 kann an der Innenseite der Distanzhülse 106 beispielsweise durch einen Vorsprung, gegebenenfalls auch durch einen ringförmig umlaufenden Vorsprung ausgebildet sein.

Die dem Widerlager 104 gegenüberliegende Seite des Gehäuses 9' wird zusammen mit der Distanzhülse 106 durch den Anschlag 105 fixiert, so dass die Absperreinheit 1' vollständig innerhalb der Distanzhülse 106 gesichert ist.

Im Innenbereich der Distanzhülse 106 und des Anschlussgehäuses 5' verläuft die Betätigungsstange 18', die ebenfalls aus Kunststoff ausgebildet ist und mit ihrem ersten Ende in einer zu der in DE 10 2006 022 641 A1 gezeigten Anordnung analogen Weise auf die Absperreinheit 1' wirkt. Zur Führung der Betätigungsstange 18' ist im Bereich ihres der Absperreinheit 1' zugewandten Endes die Zentriereinheit 103 angeordnet, die im vorliegenden Beispiel als sternförmiges, einstückig mit der Betätigungsstange 18' ausgeformtes Kunststoffelement gebildet ist. Die Zentriereinheit 103 kann auch einen beliebigen anderen - vorzugsweise mit der Betätigungsstange 18' einstückigen - Aufbau aufweisen. Auf ihrer der Absperreinheit 1' abgewandten Seite ist die Betätigungsstange 18' in ebenfalls zu der in DE 10 2006 022 641 B1 gezeigten Lösung analoger Weise mit einem Exzenter 19' der Aktuatoreinheit 20' verbunden, wobei die Aktuatoreinheit 20' wie auch der Exzenter 19' einstückig aus einem Kunststoff, vorzugsweise einem Kunststoff-Spritzgussteil hergestellt sein können.

Wie aus Fig. 2 ersichtlich ist, kann die Verbindung zwischen der Befestigungsstange 18' und der Aktuatoreinheit 20', genauer dem Exzenter 19' über eine lösbare Verbindung erfolgen. Im Ausführungsbeispiel weist das dem Exzenter 19' zugewandte Ende der Befestigungsstange 18' einen Schnappverschluss auf, welcher durch eine entsprechende Krafteinwirkung dazu gebracht werden kann, ein stangenförmiges Element des Exzenters 19' zu umfassen.

Im gezeigten Beispiel kann das Anschlussgehäuse 5' aufgrund seiner lösbar ausgeführten Verbindung mit der Rohrleitung 4' auf einfache Weise montiert bzw. demontiert werden. Die lösbare Verbindung kann dabei beispielsweise durch eine Schraubverbindung 109 (gegebenenfalls mit Spezialschrauben zur Sicherung gegen unbefugtes Öffnen) oder auch als Bajonettverschluss ausgebildet sein. Wie aus Fig. 2 ersichtlich ist, verbindet die Schraubverbindung 109 den Flansch 100 des Anschlussgehäuses 5' mit dem Flansch 101 der Rohrleitung 4'. Im Ausführungsbeispiel sind hierzu (nicht näher dargestellte) Schraubverbindungen 109 vorgesehen.

Zur Montage der erfindungsgemäßen Hauseinführung kann zunächst die Rohrleitung 4' ohne Anschlussgehäuse und Distanzhülse eingebaut werden. Dabei führt die Rohrleitung 4' üblicherweise durch eine nicht näher dargestellte Wand des Gebäudes. Das Teilstück der Rohrleitung 4', welches durch die Wand verläuft, kann dabei in bekannter Weise von einem Kunststoffrohr, beispielsweise aus Polyethylen, umgeben sein, welches durch entsprechende außenseitige Rippen auszugssichernd mit der Wand verbunden ist. Im Ausführungsbeispiel ist vorgesehen, dass die Rohrleitung 4' selbst bereits entsprechende außenseitige Rippen aufweist. Die Rohrleitung 4' ersetzt somit das bislang notwendige zusätzliche Kunststoffrohr.

Nachfolgend wird die Distanzhülse 106 von der Hausinnenseite her in die Rohrleitung 4' bis zum Anschlag 105 eingeschoben, wobei in der Distanzhülse 106 die Absperreinheit 1' in ihrem Gehäuse 9' bereits eingesetzt ist. Nachfolgend wird im Zuge der Montage des Anschlussgehäuses 5' die Betätigungsstange 18' in das Innere der Distanzhülse 106 eingeführt, wobei sie quasi automatisch aufgrund der Zentriereinheit 103 ihre korrekte Position gegenüber der Absperreinheit 1' einnimmt. Die gezeigte modulare Bauweise der erfindungsgemäßen Hauseinführung gestattet es dabei, insbesondere die Distanzhülse 106 zusammen mit der Absperreinheit 1' als standardisiertes Bauteil zu realisieren, das zusammen mit einer Vielzahl möglicher Rohrleitungen und auch möglicher Anschlussgehäuse 5' eingesetzt werden kann. Auf diese Weise lassen sich verschiedenste Einbausituationen, insbesondere im Hinblick auf verschiedene Wandstärken von Gebäuden oder Anforderungen an Anschlussgehäuse vergleichsweise einfach beherrschen. Die modulare Bauweise ermöglicht dabei auch eine hohe Wartungsfreundlichkeit der erfindungsgemäßen Hauseinführung. Wie im vorliegenden Beispiel gezeigt, können praktisch alle Teile der erfindungsgemäßen Hauseinführung (gegebenenfalls mit Ausnahme der Feder 14') auf kostengünstige Weise durch ein Kunststoff-Spritzgussverfahren hergestellt werden. Daneben können vergleichbare Vorrichtungen nicht nur im Gasbereich, sondern auch für Hauseinführungen für andere Fluide, wie beispielsweise Wasser, Anwendung finden.

Im Ausführungsbeispiel ist die Absperreinheit 1' in dem von der Wand umgebenen Teilstück der Rohrleitung 4' angeordnet. Die Absperreinheit 1' weist dabei einen Abstand von 100 mm, vorzugsweise 150 mm, von dem Innenraum des Gebäudes bzw. von der Wärmeeinflusszone auf.

Die temperaturbeeinflussbare Aktuatoreinheit 20' kann auf unterschiedliche Art und Weise ausgeführt sein. Hierzu kann auch auf die aus dem allgemeinen Stand der Technik bzw. den zitierten Schriften bekannten Lösungen zurückgegriffen werden, die in der Regel vorsehen, dass eine Betätigungseinheit manuell gespannt wird, um den Schließkörper 12' bzw. dessen Schließfläche von dem Ventilsitz abzuheben. In der gespannten Position wird die manuelle Betätigungseinheit bzw. die Aktuatoreinheit 20' in der Regel durch eine Schnellsicherung, die Bestandteil der Aktuatoreinheit 20' ist, fixiert. Wenn nun im Fall eines Brandes oder allgemein beim Auftreten einer hohen Hitzeentwicklung, z. B. über 90 °C, die Schmelzsicherung gelöst (zerstört) wird und somit die Betätigungseinheit nicht mehr fixiert ist, wird - bedingt durch die Feder 14' - der Schließkörper 12' in Verschlussstellung verschoben. Im Ausführungsbeispiel ist vorgesehen, dass zum Verschließen der Absperreinheit 1 die Betätigungseinheit auch manuell in Verschlussstellung (und wieder zurück) verschoben werden kann. Die Betätigungseinheit zum manuellen Betätigen der Absperreinheit 1' weist im Ausführungsbeispiel eine Flügelmutter und den bereits genannten Exzenter 19' auf.

Die manuelle Betätigungseinheit und die Aktuatoreinheit 20' können im wesentlichen, wie dies auch aus dem Stand der Technik bekannt ist, auf dieselben Komponenten zurückgreifen. Aufgrund der Mehrzahl an möglichen konstruktiven Ausgestaltungen wurde auf eine detaillierte Darstellung der Schmelzsicherung, welche häufig in Form einer Patrone (Lotelement) ausgebildet ist, verzichtet. Das Anschlussgehäuse 5' ist im Ausführungsbeispiel als Eckversion ausgebildet. Aus dem allgemeinen Stand der Technik sind auch Durchgangsversionen bekannt, auf die die Erfindung in identischer Weise angewendet werden kann.

## Patentansprüche

1. Vorrichtung zum Verschließen eines Leitungssystems, mit einer in einer Rohrleitung (4') angeordneten Absperreinheit (1') und einer Aktuatoreinheit (20'), wobei die Aktuatoreinheit (20') in einer möglichen Wärmeeinflusszone angeordnet und geeignet ist, wenn sie einer Temperatur ausgesetzt ist, die einen definierten Bereich übersteigt, derart auf die Absperreinheit (1') einzuwirken, dass die Absperreinheit (1') das Leitungssystem verschließt und wobei die Absperreinheit (1') außerhalb der Wärmeeinflusszone angeordnet ist, **dadurch gekennzeichnet, dass** die Absperreinheit (1') in einem Gehäuse (9') angeordnet ist, welches in einer Distanzhülse (106) aufgenommen ist, wobei die Distanzhülse (106) in die Rohrleitung (4') eingeschoben ist, und wobei das Gehäuse (9') und die Distanzhülse (106) aus einem Kunststoff gebildet sind.

2. Vorrichtung nach Anspruch 1,
**dadurch gekennzeichnet, dass** die Rohrleitung (4') an ihrer Innenseite einen Anschlag (105) zur Begrenzung des Einschubweges der Distanzhülse (106) aufweist.

3. Vorrichtung nach einem der vorangehenden Ansprüche, **dadurch gekennzeichnet, dass** die Rohrleitung (4') im Bereich der eingebauten Distanzhülse (106) an ihrer Innenseite aus einem Kunststoff ausgebildet ist.

4. Vorrichtung nach Anspruch 3,
**dadurch gekennzeichnet, dass** die Rohrleitung (4') im Bereich der eingebauten Distanzhülse (106) als Kunststoff-Spritzgussteil ausgebildet ist.

5. Vorrichtung nach einem der vorangehenden Ansprüche 2-4, **dadurch gekennzeichnet, dass** der Anschlag (105) als umlaufender Absatz ausgebildet ist.

6. Vorrichtung nach einem der vorangehenden Ansprüche, **dadurch gekennzeichnet, dass** die Rohrleitung (4') lösbar mit einem Anschlussgehäuse (5') verbunden ist.

7. Vorrichtung nach Anspruch 6 in Kombination mit Anspruch 2, **dadurch gekennzeichnet, dass** das Anschlussgehäuse (5') einen in das Innere der Rohrleitung (4') ragenden Stutzen (108) aufweist, dessen Stirnseite zusammen mit dem Anschlag (105) die Distanzhülse (106) im Inneren der Rohrleitung (4') fixiert.

8. Vorrichtung nach einem der vorangehenden Ansprüche 2-7, **dadurch gekennzeichnet, dass** die Absperreinheit (1') in dem Gehäuse (9') in das dem Anschlussgehäuse (5') abgewandte Ende der Distanzhülse (106) eingeschoben und zwischen einem Widerlager (104) und dem Anschlag (105) fixiert ist.

9. Vorrichtung nach einem der vorangehenden Ansprüche, **dadurch gekennzeichnet, dass** die Aktuatoreinheit (20') mechanisch in Wirkverbindung mit der Absperreinheit (1') steht.

10. Vorrichtung nach einem der vorangehenden Ansprüche, **dadurch gekennzeichnet, dass** die Distanzhülse (106) als Kunststoff-Spritzgussteil ausgebildet ist.

## Claims

1. Device for closing a line system, having a shut-off unit (1') arranged in a pipeline (4') and having an actuator unit (20'), wherein the actuator unit (20') is arranged in a possible heat-influencing zone and is suitable, if it is exposed to a temperature which exceeds a defined range, to act on the shut-off unit (1') in such a way that the shut-off unit (1') closes the line system, and wherein the shut-off unit (1') is arranged outside the heat-influencing zone,
**characterized in that** the shut-off unit (1') is arranged in a housing (9') which is received in a spacer sleeve (106), wherein the spacer sleeve (106) is inserted into the pipeline (4'), and wherein the housing (9') and the spacer sleeve (106) are formed from a plastic.

2. Device according to Claim 1,
**characterized in that** the pipeline (4') has on its inner side a stop (105) for limiting the insertion travel of the spacer sleeve (106).

3. Device according to one of the preceding claims,
**characterized in that**, in the region of the installed spacer sleeve (106), the pipeline (4') is formed on its inner side from a plastic.

4. Device according to Claim 3,
**characterized in that**, in the region of the installed spacer sleeve (106), the pipeline (4') is formed as a plastic injection-moulded part.

5. Device according to one of the preceding Claims 2-4,
**characterized in that** the stop (105) is formed as a peripheral shoulder.

6. Device according to one of the preceding claims,
**characterized in that** the pipeline (4') is releasably connected to a connection housing (5').

7. Device according to Claim 6 in combination with Claim 2, **characterized in that** the connection housing (5') has a connection piece (108) which projects into the inside of the pipeline (4') and the end side of which, together with the stop (105), fixes the spacer sleeve (106) in the inside of the pipeline (4').

8. Device according to one of the preceding Claims 2-7, **characterized in that** the shut-off unit (1') in the housing (9') is inserted into that end of the spacer sleeve (106) facing away from the connection housing (5') and fixed between an abutment (104) and the stop (105).

9. Device according to one of the preceding claims,
**characterized in that** the actuator unit (20') is in mechanical operative connection with the shut-off unit (1').

10. Device according to one of the preceding claims,
**characterized in that** the spacer sleeve (106) is formed as a plastic injection-moulded part.

## Revendications

1. Installation de verrouillage d'un système de conduite comportant une unité de verrouillage (1') et une unité d'actuateur (20') comportant un système de conduit tubulaire (4'), dans lequel l'unité d'actuateur (20') est disposée dans une zone d'influence thermique possible et est agencée, lorsqu'elle est soumise à une influence thermique, qui dépasse un niveau défini, à intervenir sur l'unité de verrouillage (1'), de telle manière que l'unité de verrouillage (1') verrouille le système de conduite, de telle manière que l'unité de verrouillage (1') soit disposée en dehors de la zone d'influence thermique,
**caractérisée en ce que**,
l'unité de verrouillage (1') est logée dans un boîtier (9') qui est disposé dans une douille d'écartement (106), dans lequel la douille d'écartement (106) est glissée dans le conduit tubulaire (4'), et dans lequel le boîtier (9') et la douille d'écartement (106) sont réalisés en matière synthétique.

2. Installation selon la revendication 1,
**caractérisée en ce que**,
le conduit tubulaire (4') comporte à son côté intérieur une butée d'appui (105) pour limiter le chemin de déplacement de la douille d'écartement (106).

3. Installation selon l'une des revendications précédentes,
**caractérisée en ce que**,
le conduit tubulaire (4') est réalisé, dans la région de la douille d'écartement encastrée (106), en une matière synthétique sur son côté intérieur.

4. Installation selon la revendication 3,
**caractérisée en ce que**,
le conduit tubulaire (4') est réalisé, dans la région de la douille d'écartement encastrée (106), en une matière synthétique injectée.

5. Installation selon l'une des revendications précédentes 2 - 4,
**caractérisée en ce que**,
la butée d'appui (105) est réalisée sous la forme d'une butée continue.

6. Installation selon l'une des revendications précédentes,
**caractérisée en ce que**,
le conduit tubulaire (4') est amovible et peut être couplé à un boîtier de raccordement (5').

7. Installation selon la revendication 6 en combinaison avec la revendication 2,
**caractérisée en ce que**,
le boîtier de raccordement (5') comporte des appuis (108) s'étendant à l'intérieur du conduit tubulaire (4'), dont la partie frontale fixe avec la butée d'appui (105), la douille d'écartement (106) à l'intérieur du conduit tubulaire (4').

8. Installation selon l'une des revendications précédentes 2 - 7,
**caractérisée en ce que**,
l'unité de verrouillage (1') est glissée à l'intérieur du boîtier (9'), par l'extrémité éloignée de la douille d'écartement (106) introduite dans le boîtier de raccordement (5'), fixée entre une contre pièce (104) et la butée d'appui (105).

9. Installation selon l'une des revendications précédentes,
**caractérisée en ce que**,
l'unité d'actuateur (20') est mécaniquement en connexion opérationnelle avec l'unité de verrouillage (1').

10. Installation selon l'une des revendications précédentes,
**caractérisée en ce que**,
la douille d'écartement (106) est réalisée en une matière synthétique injectée.
